# EUROPÄISCHE PATENTSCHRIFT

(11) **EP 3 528 951 B1**
(45) Veröffentlichungstag und Bekanntmachung des Hinweises auf die Patenterteilung: **27.01.2021**
(21) Anmeldenummer: 17790667.4
(22) Anmeldetag: 06.10.2017
(51) Int. Cl.: B01L 3/02, G01N 35/10

(54) **DOSIERVORRICHTUNG UND VERFAHREN ZU DEREN BETRIEB**
METERING DEVICE AND METHOD FOR OPERATION THEREOF
DISPOSITIF DE DOSAGE ET PROCÉDÉ DE FONCTIONNEMENT ASSOCIÉ

(30) Priorität: 18.10.2016 DE 102016119873
(43) Veröffentlichungstag der Anmeldung: 28.08.2019
(73) Patentinhaber: ALS Automated Lab Solutions GmbH, 07745 Jena (DE)
(72) Erfinder: BORNMANN, Gerd, 99427 Weimar (DE); WALTER, Jens, 07987 Mohlsdorf-Teichwolframsdorf (DE)
(74) Vertreter: Carlsohn, Marc René
(86) Internationale Anmeldenummer: PCT/DE2017/100850
(87) Internationale Veröffentlichungsnummer: WO 2018/072782

(56) Entgegenhaltungen:
- EP-A1- 2 641 656
- EP-A2- 1 439 002
- US-A- 4 821 586

## Beschreibung

Die Erfindung betrifft eine Dosiervorrichtung gemäß dem Oberbegriff des Anspruchs 1. Die Erfindung betrifft weiterhin ein Verfahren zum Betrieb einer Dosiereinrichtung.

Dosiervorrichtungen sind in verschiedenen Ausführungen für wissenschaftliche und technische Anwendungen bekannt und beispielsweise als Spritzen-, Membran-, Piezo- oder Zahnradpumpen ausgebildet, die manuell oder motorisch betrieben werden können. Weiterhin sind bei üblichen Laborpipetten die zu pipettierenden Volumina einstellbar. Wechselbare Pipettenspitzen gehören ebenfalls seit Jahren zum Stand der Technik.

Manuelle Pipettierhilfen wie Aspiretten oder der Peleusball erfordern ebenso wie Laborpipetten eine Betätigung oder zumindest eine Unterstützung durch die Hand eines Nutzers dieser Pipettierhilfen. Zur Bedienung bekannter manueller Pipettierhilfen muss durch den Nutzer eine gewisse Kraft aufgebracht werden, um das zu pipettierende Volumen eines Mediums anzusaugen oder abzugeben. Wird eine digitale Pipette verwendet, ist für deren Bedienung ebenfalls eine freie Hand des Nutzers erforderlich.

Einige Laboranwendungen erfordern jedoch, dass ein Nutzer (diese Bezeichnung wird der Einfachheit halber gewählt und schließt weibliche und männliche Nutzer gleichberechtigt ein) seine beiden Hände für erforderliche Manipulationen zur Verfügung hat. Beispielsweise lassen sich präzise Manipulationen von Werkzeugen und/oder Proben unter einem Mikroskop kaum damit vereinbaren, dass der Nutzer mit einer Hand eine vergleichsweise grobe Pipettierbewegung ausführt. Es ist koordinativ sehr schwierig, zu dosierende Volumina feinfühlig zu kontrollieren und zugleich die Lage und Position einer Pipette stabil zu halten, wie dies beispielsweise bei der selektiven Entnahme kleiner Partikel oder biologischer Proben erforderlich ist.

Der Erfindung liegt daher die Aufgabe zugrunde, eine gegenüber dem Stand der Technik verbesserte Möglichkeit zur Manipulation von Proben und/oder zum Dosieren von Volumina eines Mediums vorzuschlagen. Aufgabe der Erfindung ist es insbesondere eine verbesserte Dosiervorrichtung sowie ein Verfahren zum Betrieb einer Dosiervorrichtung vorzuschlagen.

Die Aufgabe wird hinsichtlich der Dosiervorrichtung durch die Merkmale des Anspruchs 1 und hinsichtlich des Verfahrens durch die Merkmale des Anspruchs 9 gelöst. Vorteilhafte Weiterbildungen finden sich in den abhängigen Ansprüchen.

Die Dosiereinrichtung ist zur gesteuerten Aufnahme und/oder Abgabe wenigstens eines Mediums ausgebildet und weist mindestens eine Pumpeinheit auf. Außerdem besitzt die Dosiervorrichtung mindestens eine Steuereinheit mit mindestens einem Signaleingang und wenigstens einem Sensor zur Erfassung der Nutzereingabe und zur Umwandlung der erfassten Nutzereingabe in einen Messwert und einer Auswerteeinheit zur Ansteuerung der mindestens einen Pumpeinheit in Abhängigkeit des Messwerts.

Gekennzeichnet ist eine erfindungsgemäße Dosiervorrichtung dadurch, dass die Nutzereingabe eine Kraftwirkung einer durch einen Nutzer bewirkten Druckänderung ist und die Druckänderung eine Änderung des Luftdrucks am Signaleingang der Steuereinheit ist.

Kern der Erfindung ist es, eine feinfühlig bedienbare Bedienung der Dosiervorrichtung zu ermöglichen. Dazu wird eine an sich arbeitsschutzrechtlich unzulässige und wegen möglicher Kontaminationen des zu dosierenden Mediums durch den Fachmann vermiedene Weise der Benutzung mithilfe des Mundes des Nutzers von Dosiervorrichtungen aufgegriffen und derart weiterentwickelt, dass weder Bedenken in Hinblick auf den Arbeits- und Gesundheitsschutz des Nutzers als auch in Hinblick auf eine Kontaminationsgefahr des Mediums bestehen.

Als Medium kommen dabei flüssige und gasförmige Medien sowie Suspensionen, Dispersionen, Kolloide, Schäume und Gemische dieser in Frage, soweit diese aufgrund ihrer Fließvermögen mittels der Pumpeinheit aufgenommen, insbesondere angesaugt, oder abgegeben, insbesondere ausgestoßen, werden können.

Der Signaleingang kann mit einem Schlauch und optional mit einem Mundstück versehen sein. Ein Nutzer der Dosiervorrichtung bläst in das Mundstück oder saugt an diesem und bewirkt so eine Druckänderung, die sich als ein Überdruck beziehungsweise als ein Unterdruck darstellt.

In weiteren nicht von der Erfindung umfassten Ausführungen der Dosiervorrichtung wird die Änderung der Druckkraft dadurch bewirkt, dass der Nutzer auf einen Kraftsensor beißt. Dabei können beispielsweise die Größe der Beißkraft und/oder deren zeitliche Dauer oder Sequenz erfasst und in wenigstens einen Eingangswert umgewandelt werden. Der Kraftsensor kann in einer austauschbaren Umhüllung angeordnet sein, um die nötigen Hygieneanforderungen insbesondere bei einem Wechsel des Nutzers zu erfüllen. Aus demselben Grund ist das Mundstück optional austauschbar.

Statt einer Beißkraft kann beispielsweise das Anspannen, - und bedingt das Relaxieren -, eines Muskels oder einer Muskelgruppe als eine auf einen Sensor gerichtete Kraftwirkung infolge einer Druckänderung erfasst werden. Beispielsweise kann an einem Arm oder Bein des Nutzers ein entsprechender Sensor angebracht sein, der zur Erfassung von Muskelkontraktionen und -relaxationen ausgebildet ist. Da eine Beißkraft oder eine Muskelspannung nur in einer Richtung aufgebracht werden kann, ist in möglichen Weiterbildungen der Dosiervorrichtung die Erteilung eines zusätzlichen Befehls vorgesehen, durch den eine Modifikation des Steuerbefehls dahingehend erreicht wird, dass eine resultierende Fließrichtung des Mediums, und somit entweder eine Aufnahme oder eine Abgabe des Mediums, kodiert wird.

In weiteren nicht umfassten Ausführungen der Dosiervorrichtung kann eine Nutzereingabe, beruhend auf der Erfassung einer gegenkraftfreien Bewegung, z. B. der Bewegung eines Fingers, sein. Verschiedene Gesten können dabei unterschiedliche Funktionen abbilden. Die erfassten Gesten werden mittels einer geeigneten Vorrichtung in eine Kraftwirkung umgesetzt.

In einer vorteilhaften weil einfach umzusetzenden Ausführung wird durch den Nutzer vor dem Ändern der Druckkraft ein Sprachbefehl erteilt. Dieser Sprachbefehl kann in einem geeigneten Speicher der Dosiervorrichtung hinterlegt sein. Der Sprachbefehl kann vorgegeben oder durch den jeweiligen Nutzer vorab definiert sein. Zur Erfassung des Sprachbefehls ist beispielsweise ein Mikrofon vorhanden. Die Steuereinheit ist vorteilhaft derart konfiguriert, dass eine logische Verknüpfung von erfasstem Sprachbefehl und Änderung der Druckkraft ermöglicht ist.

Die Dosiervorrichtung weist in weiteren Ausführungen eine Manipulationseinheit auf die derart mit der Pumpeinheit in Verbindung steht, dass das Medium mittels der Pumpeinheit wenigstens entlang von Abschnitten der Manipulationseinheit bewegt wird oder bewegbar ist. Die Verbindung zwischen der Pumpeinheit und der Manipulationseinheit ist strömungstechnischer Natur und ermöglicht in Abhängigkeit des Mediums eine hydraulische oder pneumatische Verbindung beider.

Die Manipulationseinheit umfasst in einer möglichen Ausführung der Dosiereinrichtung eine Medienleitung, beispielsweise in Form eines Kanals oder Schlauchs, und ein Endstück.

Um mit der Manipulationseinheit eine Probe, beispielsweise Partikel eines Materials, Zellen oder Gewebe in einer Suspension oder einem Gewebe manipulieren zu können, ist das Endstück vorteilhaft als ein Griffstück ausgebildet.

An dem Endstück kann ein Aufnahmebereich zur Aufnahme einer Spitze - oder allgemein: eines sich verjüngenden Rohrstücks - ausgebildet sein. So kann der Aufnahmebereich als ein Konus geformt sein, auf den eine handelsübliche Pipettenspitze aufgesetzt werden kann. Spitze und Pipettenspitze werden im Folgenden als synonyme Begriffe verwendet, falls dies nicht ausdrücklich anders angegeben ist. Es ist weiterhin möglich, dass das Endstück beziehungsweise die Manipulationseinheit mit einer Abwurfvorrichtung zum Abwerfen der Pipettenspitze versehen ist, wie diese beispielsweise von handbetätigten Laborpipetten bekannt sind.

Die Spitze ist beispielsweise eine übliche wechselbare Pipettenspitze für den einmaligen oder mehrfachen Gebrauch, eine Kapillare oder eine Kanüle, beispielsweise aus Kunststoff, Metall oder Glas.

In einer weiteren Ausführung kann die Spitze fest und unlösbar oder manuell oder automatisch wechselbar an der Manipulationseinheit angebracht sein.

In einer weiteren Ausführung der Dosiervorrichtung ist ein Medienreservoir vorhanden, das mit der Manipulationseinheit in einer strömungstechnischen Verbindung steht, so dass mittels der angesteuerten Pumpeinheit das Medium mindestens zwischen dem Endstück und dem Medienreservoir transportierbar ist.

Das Medium kann je nach Einstellung der Steuereinheit und der durch den Nutzer vorgegebenen Einstellungen der Dosiervorrichtung in vordefinierten Volumina und/oder Zeitdauern aufgenommen oder abgegeben werden. Es ist außerdem möglich, das Medium während individuell wählbarer Zeitdauern und/oder in individuell wählbaren Volumina aufzunehmen oder abzugeben.

Beispielsweise ist es bei der Abgabe vordefinierter Volumina möglich, Tropfen definierte Größe und Volumen auf einer Oberfläche anzuordnen.

Ein Volumenstrom kann beispielsweise genutzt werden, um Verunreinigungen aus einer Probe abzusaugen.

Ein definierter Unterdruck kann verwendet werden, um Partikel mit einer definierten Kraft an der Pipettenspitze zu halten.

In einer vorteilhaften Weiterbildung der Dosiervorrichtung sind der Steuereinheit eine Parameterliste und/oder Datenbankeinträge zugeordnet, die für unterschiedliche Medien spezifische auswählbare Betriebsparameter enthalten. Je nachdem welches Medium aktuell aufgenommen und/oder abgegeben werden soll, werden die Betriebsparameter der Dosiervorrichtung, beispielsweise der mittels der Pumpeinheit erzeugte Druck, Schaltzeiten, Schaltverzögerungen sowie eventuelle vor- und Nachlaufzeiten auf die Eigenschaften des betreffenden Mediums abgestimmt.

Zusätzlich können aktuelle Betriebsbedingungen wie Umgebungstemperatur, Temperatur des Mediums und der Umgebungsdruck erfasst werden. Die aktuellen Betriebsparameter können entsprechend der aktuellen Betriebsbedingungen modifiziert werden, um eine präzise Manipulation von Objekten und/oder Proben zu unterstützen. Beispielsweise können unerwünschte Kapillarwirkungen der Pipettenspitze und/oder der Medienleitung gemindert werden, indem eine aktuelle Temperatur des Mediums, durch die eine Viskosität des Mediums beeinflusst wird, berücksichtigt wird.

Eine Datenbank kann in der Steuereinheit abgelegt sein oder mittels einer zur Übertragung von Daten geeigneten Datenverbindung mit der Steuereinheit verbunden sein.

Die Steuereinheit kann mit einer Nutzerschnittstelle verbunden sein oder eine solche aufweisen. Beispielsweise ist an der Nutzerschnittstelle ein weiteres Gerät, z. B. ein Sensor, derart anschließbar, dass Daten zwischen der Steuereinheit und dem angeschlossenen Gerät Daten ausgetauscht werden können. So können in einer möglichen Ausführung der Dosiervorrichtung eine Kamera und/oder ein Mikrofon vorhanden und über die Nutzerschnittstelle mit der Steuereinheit verbunden sein. Die Verbindung von Nutzerschnittstelle und Steuereinheit kann per Kabel oder kabellos, beispielsweise per Funk, realisiert sein.

Es ist weiterhin möglich, dass der Steuereinheit beispielsweise ein Signalverstärkungsfaktor vorgegeben wird. Dieser kann voreingestellt sein oder beispielsweise von dem Nutzer individuell gewählt werden. Eine solche Option erhöht den individuellen Bedienkomfort und die Feinfühligkeit der Dosiervorrichtung, insbesondere der Manipulationseinheit.

Zusätzlich oder alternativ kann der Steuereinheit wenigstens ein weiterer Parameter vorgegeben sein oder vorgegeben werden. In Hinblick auf das jeweils zu prozessierende Medium können beispielsweise die aufzunehmende oder abzugebende Menge oder das entsprechende Volumen des Mediums, ein Volumenstrom des Mediums sowie ein Arbeitsdruck, der mittels der Pumpeinheit erzeugt wird, vorgegeben werden.

In weiteren Ausführungen der erfindungsgemäßen Dosiervorrichtung ist ein Ventilblock zwischen Pumpeinheit und Endstück der Manipulationseinheit eingeschaltet. Mit diesem ist es beispielsweise möglich, bis zum Aufbrauchen eines in dem Medienreservoir vorgehaltenen Mediums in einer Pumprichtung zu arbeiten.

Die Pumpeinheit kann eine Zahnradpumpe, Schlauchpumpe, Spritzenpumpe, Piezopumpe, Membranpumpe, Kolbenpumpe oder Spiralpumpe sein. Sie kann ferner durch mindestens zwei Spritzenpumpen gebildet sein, welche entweder durch einen gemeinsamen Antrieb oder durch jeweils separate Antriebe betätigt werden.

Der Aufbau der Pumpeinheit kann in verschiedenen Weisen gestaltet sein. Es können beispielsweise mindestens zwei Pumpen vorhanden sein, die einen Medienfluss in entgegengesetzte Richtungen bewirken. Zwischen den Pumpen kann je nach Bedarf umgeschaltet werden. Alternativ kann mindestens eine Pumpe auch invertiert betrieben werden. Mit einer Pumpe kann also das Medium zeitlich aufeinanderfolgend in entgegengesetzte Richtungen gefördert werden.

Werden mindestens zwei (Spritzen-)pumpen verwendet, können diese fluidisch invers arbeitend ausgeführt oder ansteuerbar sein. Dadurch ist es möglich, unterbrechungsfrei mehr als ein Volumen beispielsweise einer Spritzenpumpe aufzunehmen oder abzugeben. Ermöglicht wird dies, indem mit Erreichen des Endes eines Hubs einer der Spritzenpumpen auf die jeweils andere Spritzenpumpe umgeschaltet wird. In einer solchen Ausführung steht jederzeit mindestens eine teilweise gefüllte Spritzpumpe zu Verfügung. Zum Zeitpunkt des Endes eines Pumpenhubs ist eine der Spritzenpumpen leer während die andere gefüllt ist.

Alternativ kann mindestens eine Spritzenpumpe in einer Warteposition gehalten werden. Mit Beendigung des Pumpenhubs einer Spritzenpumpe wird die weitere Medienförderung durch die bis dahin in Warteposition befindliche Spritzenpumpe übernommen. Die zuvor geleerte Spritzenpumpe kann nun in die Warteposition gebracht werden.

Die Pumpwirkung kann in weiteren Ausführungen durch Unterdruck- und/oder Überdrucksysteme erzeugt werden. Diese können über mindestens ein Ventil innerhalb der Dosiervorrichtung auf das Medium einwirken und dessen Förderung bewirken. Ventile können beispielsweise Proportionalventile und/oder gepulste Sperr- oder Mehrwegeventile sein.

Die Dosiervorrichtung kann in weiteren Ausführungen mehrkanalig sein. Mit einer Nutzeingabe sind mehrere Aufnahmen und/oder Abgaben wenigstens eines Mediums möglich. So kann eine Nutzereingabe in der Steuereinheit die Ausgabe eines Steuerbefehls an mehrere Pumpeinheiten bewirken.

Es ist auch möglich, dass eine Nutzereingabe die Ausgabe von Steuerbefehlen bewirkt, die für verschiedene Pumpeinheiten unterschiedlich sind. Beispielsweise werden durch die verschiedenen Pumpeinheiten unterschiedliche Volumina und/oder Medien aufgenommen oder abgegeben.

Eine erfindungsgemäße Dosiervorrichtung kann beispielsweise zum Ansaugen von Objekten an die Manipulationseinheit und/oder zum Halten an der Manipulationseinheit verwendet werden (sogenanntes Patchen). Beispielsweise kann durch Aufnehmen beziehungsweise Ansaugen von Medium aus einem Probenraum, beispielsweise aus einer Petrischale mit einer Zellsuspension, in die Manipulationseinheit angesaugt werden. Mit dem dabei erzeugten Unterdruck kann ein ausgewähltes Objekt der Zellsuspension, beispielsweise eine mittels eines Mikroskops durch den Nutzer ausgewählte Zelle, an die Manipulationseinheit angesaugt und an oder in deren Mündung gehalten werden.

Die Stärke des Unterdrucks ist dabei vorteilhaft so gewählt oder wird so eingestellt, dass das Objekt sicher gehalten, jedoch nicht beschädigt wird.

In der Dosiervorrichtung kann ein Medium als eine Systemflüssigkeit vorhanden sein, das mit einem Probenmedium, in dem sich beispielsweise Zellen befinden, nicht mischbar ist. Das als Systemflüssigkeit fungierende Medium wird zur Erzeugung eines Unterdrucks oder eines Überdrucks an der Mündung des Endstücks nur eine begrenzte Strecke transportiert, so dass dieses nicht aus der Manipulationseinheit nach außen austritt. In einer weiteren Ausführung ist die Systemflüssigkeit gegenüber der Umgebung im Bereich des Endstücks durch z.B. einen luftdurchlässigen Filter abgegrenzt.

Die Dosiervorrichtung kann weiterhin zum Mischen und/oder zum Dosieren verschiedener Medien verwendet werden.

Die erfindungsgemäß Dosiervorrichtung wie vorstehend beschrieben sowie weitere Dosiervorrichtungen können mit einem Verfahren betrieben werden, bei dem an einem Signaleingang einer Steuereinheit der Dosiervorrichtung eine Nutzereingabe in Form einer Druckänderung erzeugt wird. Die Nutzereingabe wird mittels geeigneter Sensoren erfasst. Anschließend wird die erfasste Nutzereingabe in einen Messwert umgewandelt und in Abhängigkeit von dem Messwert ein Steuerbefehl erzeugt. Mittels des Steuerbefehls wird eine Pumpeinheit angesteuert. Die angesteuerte Pumpeinheit wird zum Erzeugen einer Druckdifferenz in einer Manipulationseinheit und zum Aufnehmen oder Abgeben eines Mediums in beziehungsweise aus der Manipulationseinheit genutzt.

Um nachteilige physikalische und/oder physikalisch-chemische Effekte zu vermindern, wird in einer vorteilhaften Ausgestaltung des Verfahrens in der Manipulationseinheit ein Basisvolumenstrom und/oder Basisdruck des Mediums eingestellt und erzeugt. Der Basisvolumenstrom wird dabei so eingestellt, dass dieser Kapillarkräften entgegengerichtet ist, die wenigstens in Abschnitten der Manipulationseinheit auftreten.

Eine Einstellung des Basisvolumenstroms und/oder Basisdrucks kann manuell, beispielsweise mittels eines Dreh- oder Schiebereglers oder automatisiert erfolgen.

Die erfindungsgemäße Dosiervorrichtung sowie das erfindungsgemäße Verfahren ermöglichen vorteilhaft, dass Nutzer, beispielsweise Mitarbeiter eines Labors, nicht nur rechtlich sondern auch technisch vor einer ungewollten Aufnahme von Medien in den Mund geschützt werden. Zugleich bleibt eine feinfühlige und präzise Manipulation der Probe und/oder von Objekten erhalten. Als weiterer Vorteil der Erfindung ist die Vermeidung von Kontaminationen des Mediums, der Probe und/oder der Objekte durch den Nutzer hervorzuheben.

Die Erfindung wird nachfolgend anhand von Ausführungsbeispielen und Abbildungen näher erläutert. Dabei zeigen:
Fig. 1 eine schematische Darstellung eines ersten Ausführungsbeispiels einer erfindungsgemäßen Dosiervorrichtung,
Fig. 2 eine schematische Darstellung eines zweiten Ausführungsbeispiels der erfindungsgemäßen Dosiervorrichtung,
Fig. 3 ein Ablaufschema einer ersten Ausgestaltung eines erfindungsgemäßen Verfahrens und
Fig. 4 ein Ablaufschema einer zweiten Ausgestaltung des erfindungsgemäßen Verfahrens.

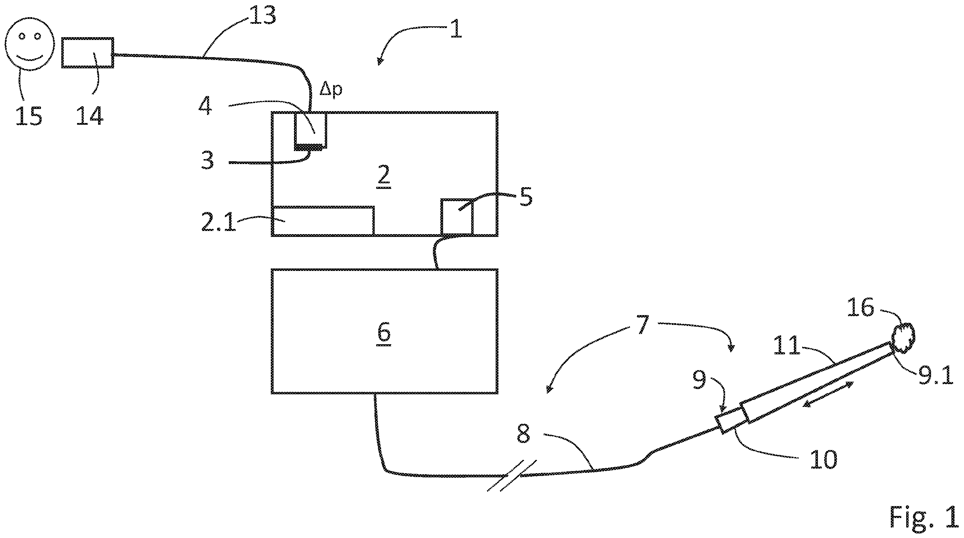

Eine in Fig. 1 schematisch dargestellte Dosiervorrichtung 1 weist als wesentliche Elemente eine Steuereinheit 2, eine Pumpeinheit 6 und eine Manipulationseinheit 7 auf.

Die Steuereinheit 2 besitzt einen mit einem Sensor 3 versehenen Signaleingang 4 zur Erfassung von Kraftwirkungen infolge von Druckänderungen Δp und eine Auswerteeinheit 2.1. Ein Signalausgang 5 der Steuereinheit 2 ist über ein Datenkabel mit der Pumpeinheit 6 verbunden, wobei die Pumpeinheit 6 mittels eines von der Steuereinheit 2 generierten und über den Signalausgang 5 ausgegebenen Steuerbefehl ansteuerbar ist.

An der Pumpeinheit 6 ist die Manipulationseinheit 7 angeschlossen, die im Ausführungsbeispiel aus einer Medienleitung 8 und einem Endstück 9 besteht.

Ein Abschnitt der äußeren Oberfläche des Endstücks 9 ist als ein Aufnahmebereich 10 zur lösbaren Aufnahme (durch den Doppelpfeil symbolisiert) und zum Halten einer Spitze 11 in Form einer Pipettierspitze, einer Kanüle oder einer Kapillare ausgebildet.

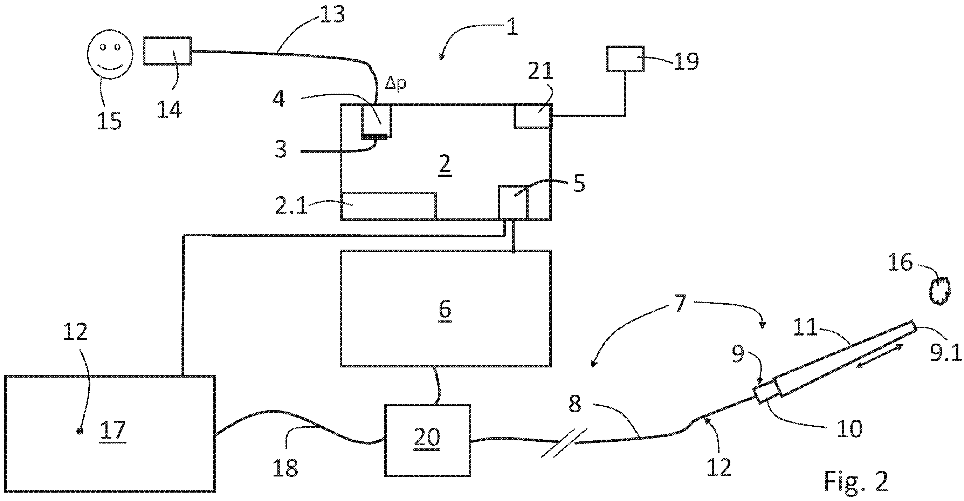

Mittels der Pumpeinheit 6 kann ein Medium 12 (siehe Fig. 2) durch die Medienleitung 8 gepumpt werden, wobei eine Förderrichtung des Mediums 12 durch die Ansteuerung der Pumpeinheit 6 mittels der Steuereinheit 2 wählbar ist.

In weiteren möglichen Ausführungen der Dosiervorrichtung 1 ist das Endstück 9 mit einem Abwerfer (nicht dargestellt) versehen, der zum Abstreifen der Spitze 11 von dem Aufnahmebereich 10 dient, wenn diese nicht mehr benötigt wird oder gewechselt werden soll.

An dem Signaleingang 4 ist ein Schlauch 13 befestigt, der an seinem freien Ende ein Mundstück 14 trägt.

Ein symbolisch dargestellter Nutzer 15 bläst in das Mundstück 14, um einen Überdruck an dem Signaleingang 4 zu erzeugen. Saugt der Nutzer 15 dagegen an dem Mundstück 14, wird eine Druckänderung Δp hin zu einem Unterdruck am Signaleingang 4 verursacht.

Durch den Sensor 3 am Signaleingang 4 wird die Druckänderung als ein Messwert einer Druckkraft erfasst und durch die Steuereinheit 2 in einen Steuerbefehl umgewandelt, der über den Signalausgang 5 an die Pumpeinheit 6 übermittelt wird.

Diese fördert entsprechend dem erhaltenen Steuerbefehl ein Medium 12 in der Medienleitung 8. Wird das Medium 12 in Richtung des Endstücks 9 gepumpt, wird an der Mündung 9.1 des Endstücks 9 ein Überdruck erzeugt. Wird dagegen das Medium 12 von der Pumpeinheit 6 angesogen, entsteht an der Mündung 9.1 ein Unterdruck. Dieser kann beispielsweise dafür genutzt werden, um ein Objekt 16 an oder in der Mündung 9.1 oder an bzw. in der aufgesetzten Spitze 11 zu halten.

In weiteren Ausführungen der Dosiervorrichtung 1 sind mehrere Steuereinheiten 2, Pumpeinheiten 6, Manipulationseinheiten 7 und/oder Medienleitungen 8 vorhanden.

In dem in der Fig. 2 dargestellten zweiten Ausführungsbeispiel der Dosiervorrichtung 1 ist zusätzlich ein Medienreservoir 17 vorhanden, in dem Medium 12 vorgehalten ist. Das Medienreservoir 17 ist über eine Zuleitung 18 mit einem Ventilblock 20 verbunden, der zwischen der Pumpeinheit 6 und dem Endstück 9 in die Medienleitung 8 eingeschalten ist.

Eine Nutzerschnittstelle 21 der Steuereinheit 2 ist mit einem Mikrofon 19 verbunden.

Der Ventilblock 20 ist ebenfalls durch die Steuereinheit 2 ansteuerbar. In einer ersten Betriebsart sind die Ventile des Ventilblocks 20 so geschalten, dass die Dosiervorrichtung 1 wie zu Fig. 1 beschrieben betrieben wird.

In einer weiteren Betriebsart ist die Ventilstellung derart eingestellt, dass das Medium 12 aus dem Medienreservoir 17 über die Zuleitung 18 in den Ventilblock 20 und weiter zum Endstück 9 gepumpt wird.

Das in dem Medienreservoir 17 enthaltene Medium 12 kann eine Systemflüssigkeit sein, die lediglich zum Erzeugen von Über- oder Unterdruck an der Mündung 9.1 des Endstücks 9 dient und nicht an die Umgebung abgegeben wird.

Das Medienreservoir 17 kann ein Medium 12 enthalten, das an die Umgebung, beispielsweise an einen vor der Mündung 9.1 befindlichen Probenraum abgegeben wird.

In einer weiteren Ausführung wird das Medium 12 aus dem Probenraum in das Medienreservoir 17 gesaugt.

Bei einer Umkehr der Pumpwirkung der Pumpeinheit 6 kann Medium 12 von dem Endstück 9 hin zum Medienreservoir 17 gepumpt werden.

In weiteren Ausführungen der Dosiervorrichtung 1 ist in dem Mundstück 14 ein Druck- oder Kraftsensor verbaut. Beißt der Nutzer 15 auf diesen Drucksensor, wird die Beißkraft als Messwert einer Druckänderung erfasst und an den Signaleingang 4 übermittelt. In einer solchen Ausführung kann zusätzlich ein Mikrofon 19 vorhanden sein, um einen oder mehrere Sprachbefehle zu erfassen und an die Steuereinheit 2 zu übermitteln.

Durch Sprachbefehle kann eine Transportrichtung des Mediums 12 ausgewählt werden, während in Abhängigkeit von dem erfassten Messwert der Druckänderung beispielsweise die aufgenommene oder abgegebene Menge oder Volumina des Mediums 12 gesteuert werden können.

Es ist ferner möglich, dass bei einer erfassten Druckänderung eine voreingestellte Menge des Mediums 12 aufgenommen oder abgegeben wird.

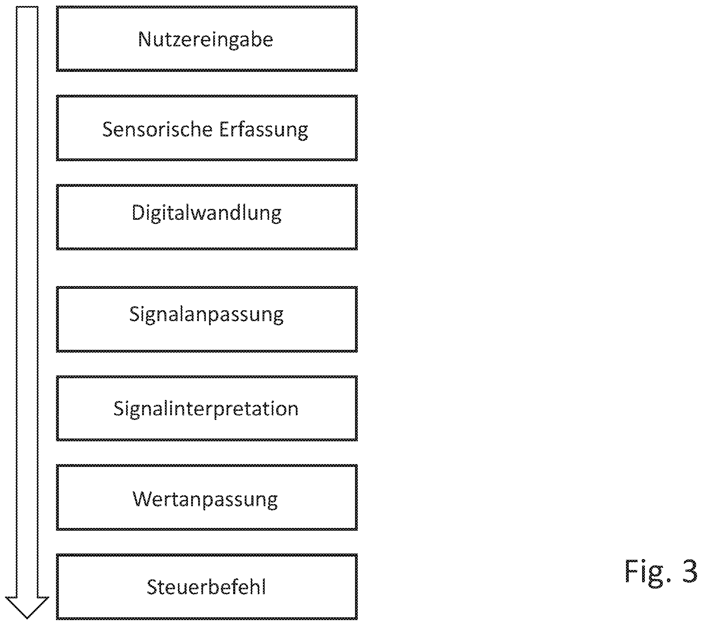

Der Ablauf des Verfahrens in einer möglichen Ausgestaltung ist in Fig. 3 schematisch gezeigt. Der Pfeil symbolisiert die Reihenfolge der Verfahrensschritte. Die Steuerung der in der Dosiervorrichtung 1 bewirkten Flussparameter erfolgt analog.

Die Nutzereingabe, die durch Blasen/Saugen an dem Mundstück oder durch Beißen auf einen Kraftsensor erfolgen kann, wird beispielsweise mittels eines Sensors 3 erfasst. Der Sensor ist beispielsweise ein Drucksensor mit einem Ausgabebereich von 0 bis 5V als Messwerte.

Im Zuge einer Digitalwandlung werden die erfassten und ausgegebenen Messwerte in einen Wertebereich von z.B. 0 bis 2048 übersetzt. Durch Übersetzen des ggf. analogen Messwertes in einen dimensionslosen digitalen Wert wird die Nutzereingabe für die weitere Verarbeitung in einer Steuereinheit aufbereitet und skaliert. Durch die Abbildung ggf. verschiedener Eingangsgrößen der Sensoren auf einen digitalen Wert von z. B. 11 Bit Datenbreite (0 bis 2048) werden die Eingangswerte der Regelung normiert, was die Nutzung gleicher Regelalgorithmen und Parameter für verschiedene Systemkonfigurationen ermöglicht.

Eine Anpassung des gewandelten Messwerts findet beispielsweise als eine Verstärkung oder Dämpfung in Abhängigkeit der Voreinstellungen der Steuereinheit und/oder der individuellen Einstellungen des Nutzers statt.

Der Messwert wird in Abhängigkeit der Voreinstellungen beispielsweise als ein Volumenstrom, Volumen und/oder Druck interpretiert.

In dem Schritt der Wertanpassung werden Regelkreise und erfasste aktuelle Betriebsparameter einbezogen und beispielsweise Volumen und Fördergeschwindigkeit mit Betriebsdaten der Pumpeinheit, beispielsweise in Hinblick auf den zurückzulegenden Hub und die Hubgeschwindigkeit abgestimmt.

Der Steuerbefehl wird im Ergebnis der vorhergehenden Schritte generiert und an dem Signalausgang 5 ausgegeben.

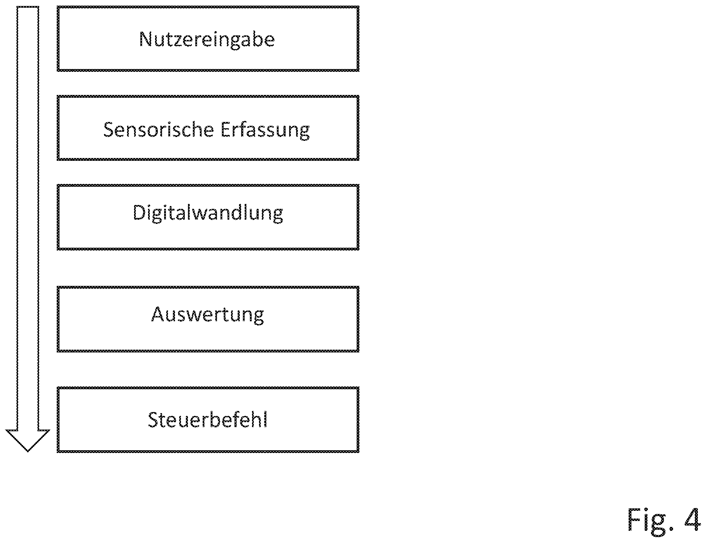

In einer weiteren Ausgestaltung gemäß der Fig. 4 wird eine getriggerte Befehlsausführung dargestellt.

Wieder erfolgt die Nutzereingabe durch Blasen/Saugen an dem Mundstück oder durch Beißen auf den Kraftsensor. Die sensorische Erfassung und die Digitalumwandlung erfolgt wie zu Fig. 3 beschrieben.

In dem Schritt der Auswertung wird geprüft, ob durch den erfassten und/oder gewandelten Messwert ein vorgegebener Schwellwert erreicht oder über-/unterschritten ist.

Das Kriterium ist beispielsweise ein Überschreiten des Schwellwerts durch den gewandelten Messwert. Hat der Nutzer die Druckänderung stark genug bewirkt und kann daher ausgeschlossen werden, dass es sich lediglich um eine Schwankung des Umgebungsdrucks, beispielsweise durch eine Luftströmung oder eine Lüftungsanlage, handelt, wird der gewandelte Messwert akzeptiert und der Steuerbefehl generiert und ausgegeben.

Der Inhalt des Steuerbefehls ist vorab festgelegt. Lediglich dessen Generierung und Ausgabe sind durch die Nutzereingabe getriggert. Beispielsweise wird aufgrund des Steuerbefehls ein Volumen von 10 µl mit einem Volumenstrom von 1 µl/s mit einem Überdruckstoß dispensiert.

Alternativ wird ein entsprechendes Volumen durch einen Unterdruckstoß aspiriert.

### Bezugszeichen

- 1: Dosiervorrichtung
- 2: Steuereinheit
- 2.1: Auswerteeinheit
- 3: Sensor
- 4: Signaleingang
- 5: Signalausgang
- 6: Pumpeinheit
- 7: Manipulationseinheit
- 8: Medienleitung
- 9: Endstück
- 9.1: Mündung (des Endstücks)
- 10: Aufnahmebereich
- 11: Spitze
- 12: Medium
- 13: Schlauch
- 14: Mundstück
- 15: Nutzer
- 16: Objekt
- 17: Medienreservoir
- 18: Zuleitung
- 19: Mikrofon
- 20: Ventilblock
- 21: Nutzerschnittstelle

## Patentansprüche

1. Dosiervorrichtung (1) zur gesteuerten Aufnahme und/oder Abgabe eines Mediums oder mehrerer Medien (12) aufweisend eine oder mehrere Pumpeinheiten (6), sowie eine oder mehrere Steuereinheit/en (2) mit
mindestens einem Signaleingang (4) mit mindestens einem Sensor (3) zur Erfassung einer Nutzereingabe und zur Umwandlung der erfassten Nutzereingabe in einen oder mehrere Messwerte und einer oder mehreren Auswerteeinheiten zur Ansteuerung der Pumpeinheiten (6) in Abhängigkeit des oder der Messwerte,
wobei
die Nutzereingabe eine Kraftwirkung einer durch einen Nutzer bewirkten
Druckänderung (Δp) ist, **dadurch gekennzeichnet, dass**
die Druckänderung (Δp) eine Änderung des Luftdrucks am Signaleingang (4) ist.

2. Dosiervorrichtung (1) nach Anspruch 1, **gekennzeichnet durch** eine oder mehrere Manipulationseinheit/en (7), die derart mit der/den Pumpeinheit/en (6) in Verbindung steht/en, dass das/die Medium/en (12) mittels der Pumpeinheit/en (6) wenigstens entlang von Abschnitten der Manipulationseinheit (7) bewegt wird oder bewegbar ist.

3. Dosiervorrichtung (1) nach einem der vorhergehenden Ansprüche, **dadurch gekennzeichnet, dass** die Manipulationseinheit/en (7) eine oder mehrere Medienleitung/en (8) und ein oder mehrere Endstück/e (9) umfasst.

4. Dosiervorrichtung (1) nach Anspruch 3, **dadurch gekennzeichnet, dass** an dem/den Endstück/en (9) ein oder mehrere Aufnahmebereich/e (10) zur Aufnahme einer oder mehrerer Pipettierspitze/n (11) ausgebildet ist.

5. Dosiervorrichtung (1) nach einem der vorhergehenden Ansprüche, **dadurch gekennzeichnet, dass** ein oder mehrere Medienreservoir /e(17) vorhanden ist/sind, das/die mit der/den Manipulationseinheit/en (7) in einer strömungstechnischen Verbindung steht/en, so dass mittels der/den angesteuerten Pumpeinheit/en (6) Medium/en (12) mindestens zwischen dem/den Endstück/en (9) und dem/den Medienreservoir/en (17) transportierbar ist/sind.

6. Dosiervorrichtung (1) nach einem der vorhergehenden Ansprüche, **dadurch gekennzeichnet, dass** der/die Steuereinheit/en (2) eine Parameterliste und/oder Datenbankeinträge zugeordnet ist/sind, die für unterschiedliche Medien (12) spezifische auswählbare Betriebsparameter enthält.

7. Verwendung einer Dosiervorrichtung (1) nach einem der Ansprüche 1 bis 6 zum Ansaugen von Objekten (16) an und/oder in die Manipulationseinheit/en (7) und/oder zum Halten an der Manipulationseinheit/en (7).

8. Verwendung einer Dosiervorrichtung (1) nach einem der Ansprüche 1 bis 6 zum Mischen und Dosieren von mehreren Medien (12).

9. Verfahren zum Betrieb einer Dosiervorrichtung (1), umfassend die Schritte
- Erzeugen einer Nutzeingabe in Form einer Änderung des Luftdrucks (Δp) an einem oder mehreren Signaleingang/gängen (4) einer oder mehrerer Steuereinheit/en (2) der Dosiervorrichtung (1) und Erfassen der Nutzereingabe,
- Umwandlung der erfassten Nutzereingabe in einen Messwert,
- Erzeugen eines oder mehrerer Steuerbefehls/e in Abhängigkeit von dem/der Messwert/e,
- Ansteuern einer oder mehrerer Pumpeinheit/en (6) mittels des/der Steuerbefehls/e
und
- Erzeugen einer Druckdifferenz in einer oder mehreren Manipulationseinheit/en (7) mittels der/die Pumpeinheit/en (6) und Aufnehmen oder Abgeben eines oder mehrerer Mediums/en (12) in beziehungsweise aus der/die Manipulationseinheit/en (7).

10. Verfahren nach Anspruch 9, **dadurch gekennzeichnet, dass** in der /den Manipulationseinheit/en (7) ein Basisvolumenstrom oder -druck des/der Mediums/en (12) eingestellt und erzeugt wird, so dass der Basisvolumenstrom oder-druck wenigstens in Abschnitten der Manipulationseinheit/en (7) auftretenden Kapillarkräften entgegengerichtet ist.

## Claims

1. Metering device (1) for controlled receiving and/or delivery of a medium or several media (12), the device comprising one or more pump units (6) and one or more control units (2), which have at least one signal input (4), having at least one sensor (3) for detecting a user input and for converting the detected user input into one or more measured values, and one or more evaluation units for actuating the pump units (6) on the basis of the measured value or values, the user input being a dynamic effect of a pressure change (Δp) brought about by a user, **characterized in that** the pressure change (Δp) is a change in the air pressure at the signal input (4).

2. Metering device (1) according to claim 1, **characterized by** one or more manipulation units (7) which are connected to the pump unit/s (6) in such a way that the medium/media (12) is/are or can be moved by means of the pump unit/s (6) at least along portions of the manipulation unit (7).

3. Metering device (1) according to either of the preceding claims, **characterized in that** the manipulation unit/s (7) comprise/s one or more media lines (8) and one or more end pieces (9).

4. Metering device (1) according to claim 3, **characterized in that** one or more receiving regions (10) for receiving one or more pipetting tips (11) are formed on the end piece/s (9).

5. Metering device (1) according to any of the preceding claims, **characterized in that** one or more media reservoirs (17) are provided which are fluidically connected to the manipulation unit/s (7) such that, by means of the actuated pump unit/s (6), medium/media (12) can be transported at least between the end piece/s (9) and the media reservoir/s (17).

6. Metering device (1) according to any of the preceding claims, **characterized in that** the control unit/s (2) is/are assigned a parameter list and/or database entries which contain specific selectable operating parameters for different media (12).

7. Use of a metering device (1) according to any of claims 1 to 6 for suctioning objects (16) onto and/or into the manipulation unit/s (7) and/or for holding said objects on the manipulation unit/s (7).

8. Use of a metering device (1) according to any of claims 1 to 6 for mixing and metering several media (12).

9. Method for operating a metering device (1), comprising the steps of:
- generating a user input in the form of a change in the air pressure (Ap) at one or more signal inputs (4) of one or more control units (2) of the metering device (1) and detecting the user input;
- converting the detected user input into a measured value;
- generating one or more control commands depending on the measured value/s;
- actuating one or more pump units (6) by means of the control command/s; and
- generating a pressure difference in one or more manipulation units (7) by means of the pump unit/s (6) and receiving or delivering one or several media (12) into or out of the manipulation unit/s (7).

10. Method according to claim 9, **characterized in that** a base volume flow or pressure of the medium/media (12) is adjusted and generated in the manipulation unit/s (7) such that the base volume flow or pressure is directed against capillary forces occurring at least in portions of the manipulation unit/s (7).

## Revendications

1. Dispositif de dosage (1) destiné à recevoir et/ou à distribuer de façon commandée un ou plusieurs milieux (12), comprenant une ou plusieurs unités de pompage (6), ainsi qu'une ou plusieurs unités de commande (2) comportant
au moins une entrée de signal (4) comportant au moins un capteur (3) destiné à la détection d'une saisie d'utilisateur et à la conversion de la saisie d'utilisateur détectée en une ou plusieurs valeurs de mesure, et une ou plusieurs unités d'évaluation destinées à commander les unités de pompage (6) en fonction de la ou des valeurs de mesure,
la saisie d'utilisateur étant un effet de force d'une variation de pression (Δp) provoquée par un utilisateur, **caractérisé en ce que**
la variation de pression (Δp) est une variation de la pression d'air au niveau de l'entrée de signal (4).

2. Dispositif de dosage (1) selon la revendication 1, **caractérisé par** une ou plusieurs unités de manipulation (7) qui sont reliées à la ou aux unités de pompage (6) de telle sorte que le ou les milieux (12) sont déplacés ou peuvent être déplacés au moins le long de sections de l'unité de manipulation (7) au moyen de la ou des unités de pompage (6).

3. Dispositif de dosage (1) selon l'une des revendications précédentes, **caractérisé en ce que** la ou les unités de manipulation (7) comprennent une ou plusieurs conduites de milieu (8) et un ou plusieurs embouts (9).

4. Dispositif de dosage (1) selon la revendication 3, **caractérisé en ce qu'**une ou plusieurs zones de réception (10) destinées à la réception d'une ou plusieurs pointes de pipette (11) sont formées sur le ou les embouts (9).

5. Dispositif de dosage (1) selon l'une des revendications précédentes, **caractérisé en ce qu'**un ou plusieurs réservoirs de milieu (17) sont présents, lesquels sont en communication fluidique avec la ou les unités de manipulation (7) de manière à permettre le transport du ou des milieux (12) au moins entre le ou les embouts (9) et le ou les réservoirs de milieu (17) au moyen de la ou des unités de pompage commandées (6).

6. Dispositif de dosage (1) selon l'une des revendications précédentes, **caractérisé en ce qu'**une liste de paramètres et/ou des enregistrements de base de données, qui contiennent des paramètres de fonctionnement sélectionnables spécifiques à différents milieux (12), sont associés à la ou aux unités de commande (2).

7. Utilisation d'un dispositif de dosage (1) selon l'une des revendications 1 à 6 pour l'aspiration d'objets (16) sur et/ou dans la ou les unités de manipulation (7) et/ou pour le maintien de ceux-ci sur la ou les unités de manipulation (7).

8. Utilisation d'un dispositif de dosage (1) selon l'une des revendications 1 à 6 pour le mélange et le dosage de plusieurs milieux (12).

9. Procédé de fonctionnement d'un dispositif de dosage (1), comprenant les étapes
- de génération d'une saisie d'utilisateur sous la forme d'une variation de la pression d'air (Δp) au niveau d'une ou de plusieurs entrées de signal (4) d'une ou plusieurs unités de commande (2) du dispositif de dosage (1), et de détection de la saisie d'utilisateur,
- de conversion de la saisie d'utilisateur détectée en une valeur de mesure,
- de génération d'une ou plusieurs instructions de commande en fonction de la ou des valeurs de mesure,
- de commande d'une ou plusieurs unités de pompage (6) au moyen de la ou des instructions de commande et
- de génération d'une différence de pression dans une ou plusieurs unités de manipulation (7) au moyen de la ou des unités de pompage (6), et de réception ou de distribution d'un ou plusieurs milieux (12) dans ou hors de la ou des unités de manipulation (7).

10. Procédé selon la revendication 9, **caractérisé en ce qu'**un débit volumique de base ou une pression volumique de base du ou des milieux (12) est réglé(e) et généré(e) dans la ou les unités de manipulation (7), de sorte que le débit volumique de base ou la pression volumique de base est opposé(e) à des forces capillaires agissant au moins sur des sections de la ou des unités de manipulation (7).
